# EUROPEAN PATENT SPECIFICATION

(11) **EP 2 314 826 B1**
(45) Date of publication and mention of the grant of the patent: **21.01.2015**
(21) Application number: 10180299.9
(22) Date of filing: 15.09.2000
(51) Int. Cl.: E21B 19/10, F16B 7/14

(54) **Gripping device and jaw assembly for gripping a wellbore tubular**
Greifvorrichtung und Klemmanordnung zum Greifen eines Bohrlochrohrs
Dispositif de préhension et ensemble formant mâchoire pour tubulaire de puits de forage

(30) Priority: 17.09.1999 NZ 33789899
(43) Date of publication of application: 27.04.2011
(62) Divisional of application: 00963175.5
(73) Proprietor: Weatherford/Lamb, Inc., Houston, TX 77056 (US)
(72) Inventor: Niven, David, New Plymouth (NZ)
(74) Representative: Blake, Stephen James

(56) References cited:
- EP-A2- 0 156 575
- DE-A1- 3 508 739
- DE-C- 67 806
- US-A- 1 031 637
- US-A- 2 283 082
- US-A- 3 019 502
- US-A- 5 103 950
- US-B1- 6 305 649

## Description

### The Technical Field

This invention relates to gripping mechanisms. In particular, the invention relates to a clamping mechanism having multiple jaws for gripping an oil field tubular.

### Background

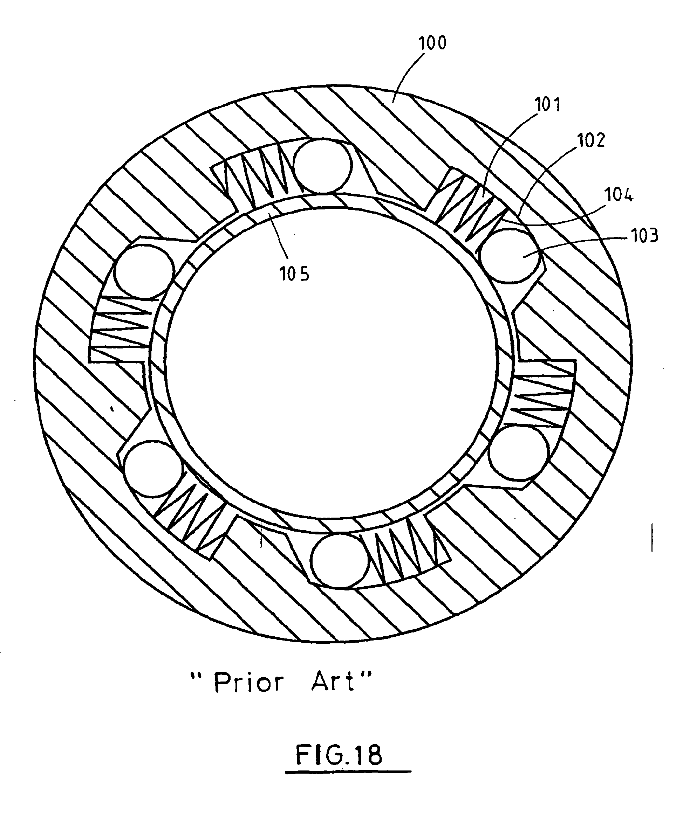

The sprague clutch is commonly employed as a one-directional clutch, for example in vehicle transmissions. Figure 18 shows a prior art type sprague clutch. A tubular body 100 has a plurality of axial recesses 101 formed therein to define a plurality of circumferential ramp surfaces 102. Rollers 103 are located within recesses 101 and maintained in a biased position by springs 104. Rollers 103 contact and engage a ground inner ring 105.

When inner ring 105 is rotated clockwise with respect to body 100 rollers 103 are urged by inner ring 105 in a clockwise direction. Due to inclined ramp surfaces 102 rollers 103 become wedged between ramp surfaces 102 and inner ring 105. Clockwise rotational force is therefore transferred between outer race 100 and inner ring 105 through rollers 103. When inner ring 105 is rotated anticlockwise with respect to outer race 100 rollers 103 move anticlockwise with respect to outer race 100. This frees the rollers and inner ring 105 is able to rotate relatively freely with respect to outer race 100.

A modified design is shown in US 5,103,950 in which roller recesses having a double cam-profile are utilised. Rollers 30 are also located within a cage 40. The double cam profile 21 enables the clutch to work in either direction. When shaft 10 and outer race 20 are wedged together by rollers 30, cage 40 is driven via shaft 10 and rollers 30. Power is thus transferred via shaft 10, rollers 30 and cage 40. This clutch arrangement works automatically so that relative rotation of shaft 10 in outer race 20 causes rollers 30 to lock them together and cage 40 is driven thereby.

During tubular running operations or well operations it is necessary to grip an oil field tubular, such as a drill string, to hold one section whilst another section is rotated relative thereto to assemble or disassemble a string. A number of automated devices for handling drill pipes are known such as disclosed in US 4,585,079.

EP0156575 discloses a clamp for a tubular in which longitudinal movement of the tubular in one direction is prevented by the engagement of balls with ramped surfaces of the clamp and the tubular.

Standard oil field tubulars are relatively robust and prior art clamping mechanisms have included toothed jaws or other means which apply a high force to a relatively small area of the tubular. As standard drill string is formed of relatively uniform steel this does not pose a major problem. However, some modern drill strings are formed of special materials, such as high alloy steel pipe (e.g. 13 Cr), and handling by conventional clamping mechanisms can damage them. Such damage may reduce the life of the drill string and reduce the advantage gained from any surface coating or treatment.

The situation is problematic as the clamping mechanisms must restrain oil field tubulars against high torques (up to 300,000 foot pounds (406 745,4 Nm)) in a dirty and greasy environment. Further, the tubulars may vary in diameter, ovality, wall thickness, material etc. The tubulars may also be dented, rusty or have surface scale.

A number of tools include ratchet mechanisms to allow free rotation in only one selected direction. Such tools include wrenches for socket sets, screw drivers, braces etc. In some situations, especially with wrenches, there is very limited space to move a tool. In some cases the ratchet steps may be so coarse that it is not possible to move between one ratchet position to the next. This may make it impossible to use a tool in a confined space.

Pipe clamps typically include jaws which grip a pipe to be retained. As with oil filled tubulars this may result in marking of the pipe. It would be desirable to provide a pipe clamp which is able to resist high rotational forces without damaging the pipe.

DE3508739 discloses a coupling for locking a distributor to a pole of a large screen. US2283082 discloses a pipe slip for the purpose of holding a drill pipe suspended in a well by a gripping action. US3019502 discloses a locking device for oil well drill rods or pipes for holding pipes or rods in oil wells. US6305649 discloses A retaining device to prevent linear movement of an elongate member in a downwards direction.

### Summary

It is an object of the invention to provide an improved gripping mechanism or to at least provide the public with a useful choice.

According to the invention, there is provided a slip in accordance with claim 1..

A clamping mechanism is disclosed herein having multiple jaws which is suitable for gripping an oil field tubular. A user actuated clamping mechanism or clutch is disclosed herein. An oil field slip is disclosed herein. A ratchet mechanism for a tool is disclosed herein. A pipe clamp is disclosed herein.

A clamping mechanism is disclosed herein including:
a plurality of jaws which may be moved apart to allow an object to be positioned within the jaws and moved together to substantially encompass the object; and
a plurality of gripping elements retained about the mouths of the jaws between the jaws and the object,
the arrangement being such that when the jaws are closed about an object rotation of the object enclosed within the jaws may cause the gripping elements to move into positions in which they are wedged between the jaws and the object so that the object is gripped by the clamping mechanism.

The gripping elements are preferably retained by positioning means which allow the gripping elements to be rotated with respect to the jaws to bring the gripping elements into a position in which they may be wedged between the jaws and an object to be gripped. The positioning means is preferably a cage formed in sections corresponding to the jaw sections.

The gripping elements may be rollers which locate within ramped recesses formed in the jaws. For rotational gripping the rollers will be axially aligned and for longitudinal gripping the rollers will be transversely aligned. The recesses containing the rollers may have a ramp in only one direction or ramps in both directions to facilitate gripping for both directions of rotation.

Alternatively, the gripping elements may be asymmetric elements known as "dog bones". Where dog bones are employed the inner jaw surface and object to be gripped may have a substantially circular cross-section. Alternatively the gripping elements may be in the form of cams located along longitudinal ribs provided about the interior surfaces of the jaws.

The jaws may be formed in two or more parts. They may be hingedly connected or translated into and out off their closed configuration. The jaw sections may interengage at their edges and include means to lock the jaw sections together. A split pin arrangement through overlapping fingers may be employed.

A clutch is disclosed herein including:
a generally cylindrical gripping surface;
gripping elements; and
positioning means retaining said gripping elements in spaced apart relation about the gripping surface wherein the positioning means may selectively rotate the gripping elements with respect to the gripping surface so as to cause the gripping elements to become wedged between the gripping surface and a gripped element.

The positioning means is preferably a cage to which the gripping elements are mounted and which may be rotated with respect to the gripping surface. The gripping elements may be rollers which co-operate with ramp surfaces formed in the gripping surface. Alternatively, the gripping elements may be cams which are tiltable about axial ribs formed circumferentially about the gripping surface. The clutch may connect directly to a shaft or the like or include an internal ring to facilitate connection to a shaft or the like.

The clutch may be incorporated into a tool in place of a traditional ratchet type mechanism.

Gripping mechanisms disclosed herein are suitable for gripping the exterior or interior (e.g. inner wall of a tube) of a gripped element.

### Brief Description of the Drawings

Reference will now be made by way of example to the accompanying drawings in which:
Figure 1: shows a conceptual view of a clamping mechanism.
Figure 2: shows a detailed view of a section of the clamping mechanism shown in figure 1.
Figure 3: shows a plan view of the main sections of a clutch connected to a shaft.
Figure 4a: shows a detailed cross-sectional view of a section of the clutch of figure 3.
Figure 4b: shows a plan view of socket set handle incorporating a clutch mechanism.
Figure 4c: shows a side view of the socket set handle shown in figure 4b.
Figure 5: shows a cross-sectional view of a clamping mechanism suitable for use in a machine for handling oil field tubulars.
Figure 6: shows a section of the cage assembly of the mechanism of figure 5 for holding the rollers in place.
Figure 7: shows a jaw of the clamping mechanism shown in figure 5.
Figure 8: shows a locking mechanism for securing the distal ends of the jaws of the clamping mechanism shown in figure 5 together.
Figure 9: shows the clamping mechanism of figures 5 to 8 incorporated within an automated oil field tubular handling device.
Figure 10: shows an arrangement utilising jaw sections opened and closed by opposed rams.
Figure 11: shows a ram actuated jaw arrangement utilising a single ram.
Figure 12a: shows a slip including a gripping mechanism for restricting axial movement of a tubular.
Figure 12b: shows a cross sectional view of a slip.
Figure 12c: shows an end view of the slip shown in figure 12b.
Figure 12d: shows a pipe clamp.
Figure 13: shows a dog bone gripping member.
Figure 14: shows an inverted cam gripping member.
Figure 15: shows an alternative wall profile of a jaw.
Figure 16: shows a gripping mechanism utilising an off set housing with graduated rollers.
Figure 17: shows an arrangement for internally gripping a pipe.
Figure 18: illustrates a known sprague type clutch.

### Detailed description

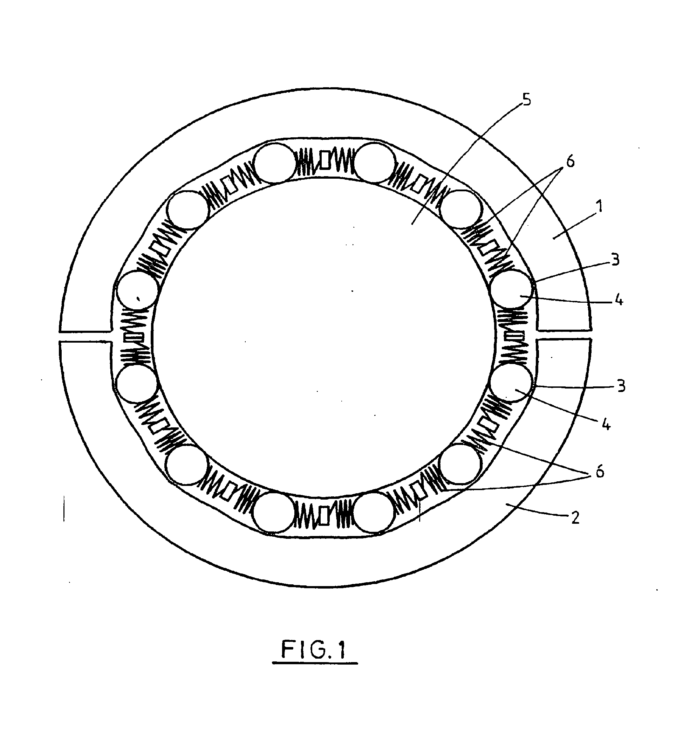

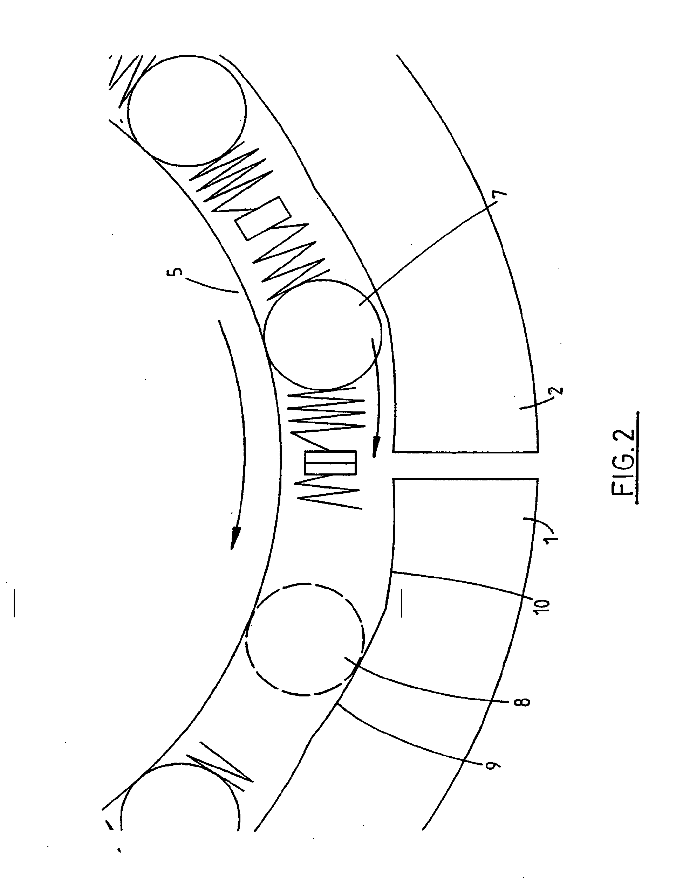

Figures 1 and 2 illustrate a clamping mechanism. Jaws 1 and 2 are provided with wedge shaped recesses 3 having rollers 4 positioned therein. Jaws 1 and 2 may be moved apart so that a tubular member 5 may be moved laterally into the jaws. Jaws 1 and 2 may be pivotally connected together at one end to enable the jaws to open and close or the jaws may be translated apart and forced back together. Although two jaws are shown in figure 1 it will be appreciated that 3 or more jaw segments could be used.

Rollers 4 are biased apart by springs 6. When jaws 1 and 2 are closed around a tubular member 5, as shown in figure 1, rollers 4 are initially located at the apex of recess 3 (see roller 7 in figure 2). When the tubular member 5 is rotated rollers 4 are urged by tubular member 5 in the direction of rotation of tubular 5.

The dashed roller 8 in Figure 2 illustrates the position adopted by the roller when urged to the left by rotation of tubular member 5. It will be seen that roller 8 becomes wedged between ramp face 9 and tubular member 5. All of the rollers 4 are likewise wedged as tubular member 5 is rotated and this causes tubular member 5 to be restrained from rotation within the clamping mechanism.

It will be apparent that rotation in the opposite direction will cause roller 8 to be wedged between opposite ramp surface 10 and tubular member 5. The clamping mechanism can thus restrain rotation of tubular member 5 in both directions.

For a relatively smooth tubular member 5 the above mechanism may be satisfactorily. If rollers 4 are biased towards tubular member 5 by springs 6 then rotation of tubular member 5 will move rollers 4 relatively consistently into their wedged positions. Where the surface of the tubular 5 is uneven it is desirable to move the rollers so that each roller is wedged between the jaws 1 and 2 and the tubular 5.

A number of positioning means could be used to position the rollers ranging from cages through to magnetic retention means.

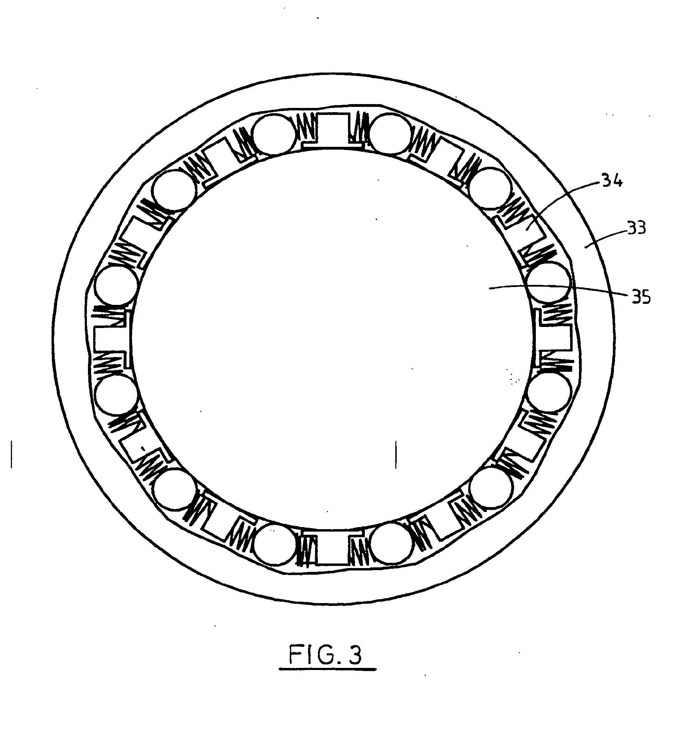

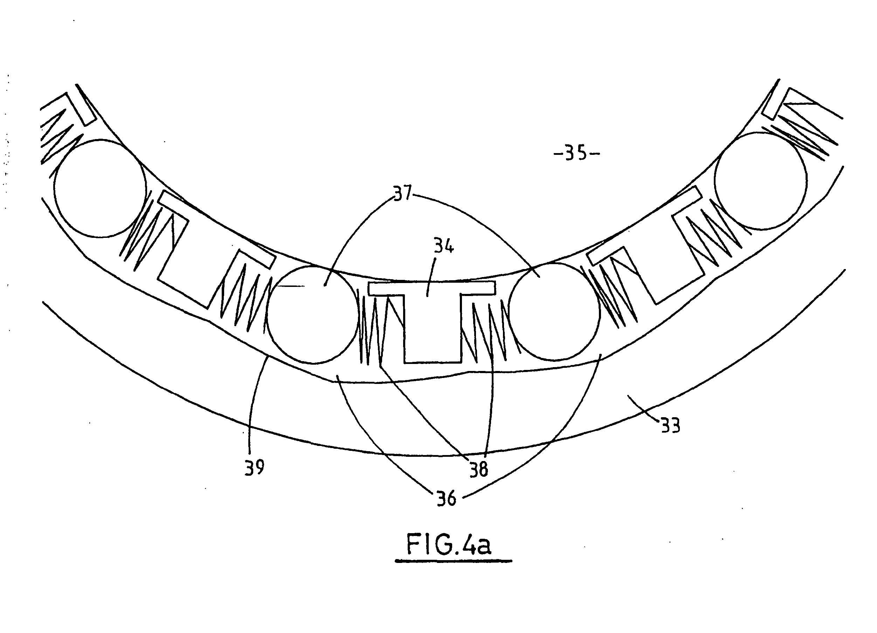

In figures 3 and 4a a clutch mechanism utilising this principle will be described. The clutch consists of an outer race 33, a cage 34, and an inner ring 35. A plurality of wedge shaped axial recesses 36 are formed in outer race 33. Rollers 37 are accommodated in recesses 36. Rollers 37 are biased by springs 38 between sections of cage 34. Cage 34 is rotatable relative to outer race 33. In a "neutral" position cage 34 is positioned with respect to outer race 33 so that rollers 37 are positioned adjacent the apexes of recesses 36. In this position rollers 37 are biased by springs 38 towards the apex of recesses 36 and so do not become wedged between ramp surfaces 39 and inner ring 35. This allows inner ring 35 to rotate freely in either direction with respect to outer race 33.

When the cage is rotated clockwise with respect to outer race 33 rollers 37 are urged by springs 38 in a clockwise direction so that they become wedged between ramp surface 39 and inner ring 35. In this position inner ring 35 is restricted from clockwise rotation relative to outer race 33. Due to the double wedge profile of the recesses 36 it will be appreciated that relative rotation of ring 35 in the anticlockwise direction can be restrained by anticlockwise rotation of cage 34 with respect to outer race 33 to position rollers 37 adjacent the opposite ramp surfaces.

This arrangement has the advantage that the clutch may be selectively operated. It also allows the clutch to operate in a free wheeling mode whilst selectively restraining rotation in either direction.

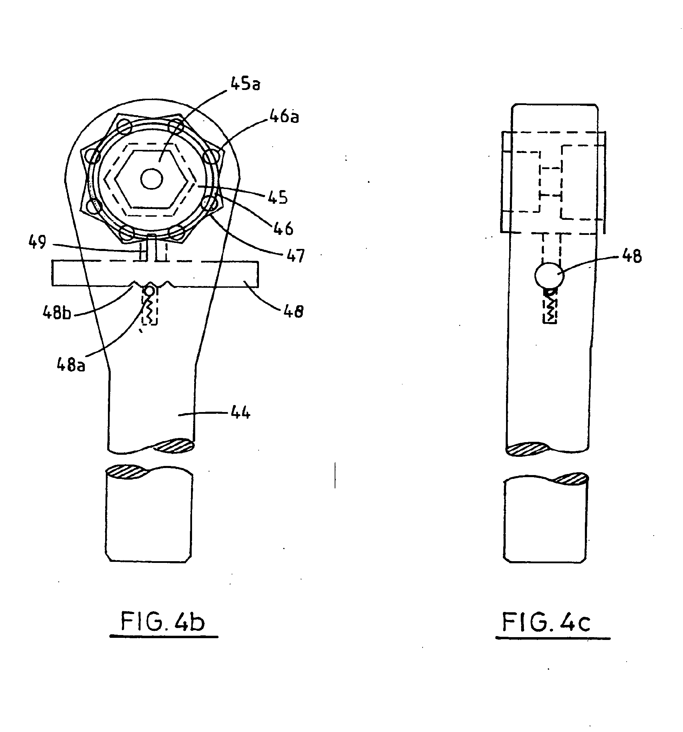

Referring now to figures 4b and 4c a socket set handle incorporating the above clutch mechanism will be described. Socket handle 44 is equivalent to outer race 33 shown in figure 4a. Cage 46 has a plurality of rollers 46a which engage within recesses 47. Inner race 45 has a hexagonal socket engaging portion 45a.

Actuator 48 has a pin 49 which engages with cage 46. Actuator 48 is shown in its neutral position but can be moved to the left or right so that pin 49 moves cage 46 to the left or right so that the clutch mechanism can be adjusted to prevent relative rotation of inner race 45 with respect to handle 44 in either direction. A spring loaded ball 48a engages with notches 48b to retain cage actuator 48 in the desired position.

It will be appreciated that this arrangement enables a socket tool to be used in very confined spaces due to the minimal handle rotation required to produce rotation of bolt head 45a.

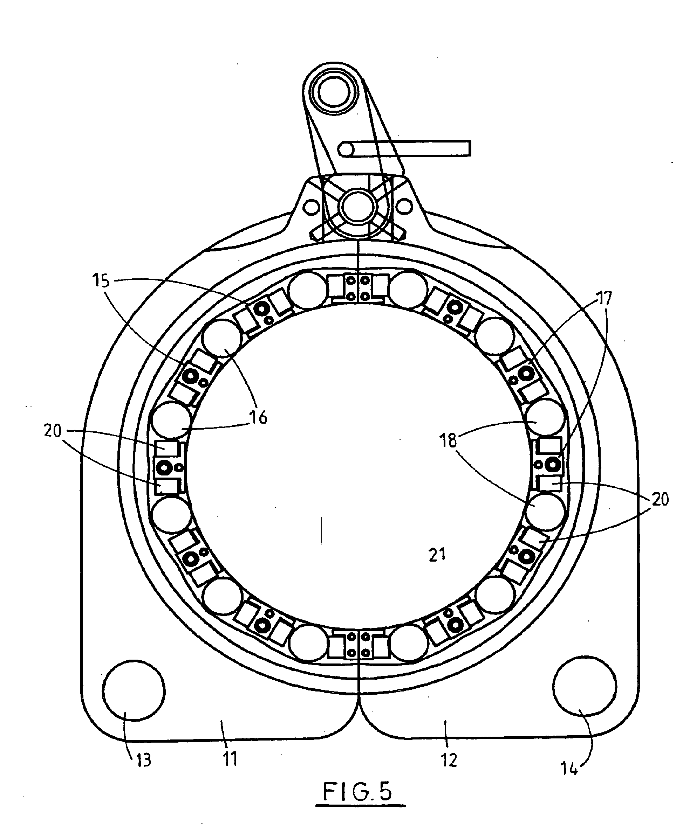

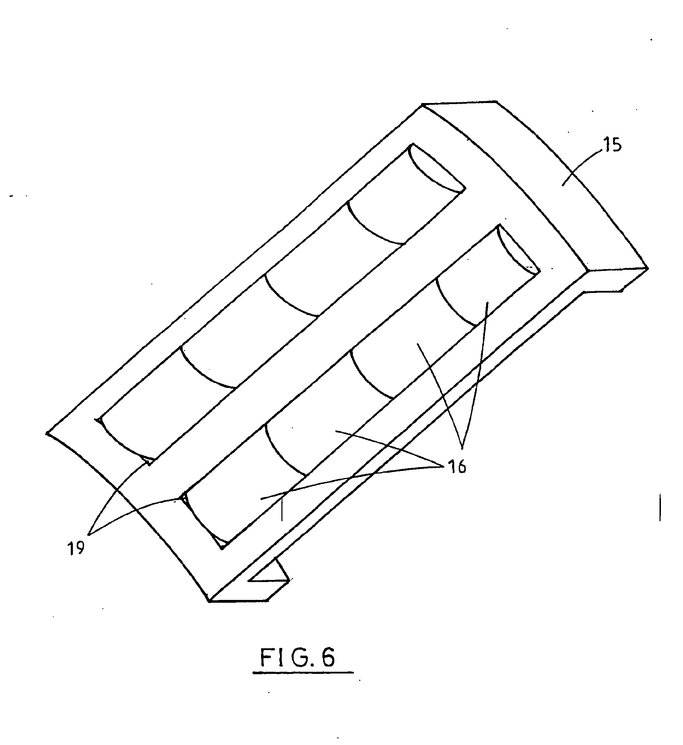

Referring now to figure 5 there is shown a clamping mechanism suitable for gripping an oil field tubular such as a drill pipe, tubing or casing. First and second jaws 11 and 12 are pivotable about respective rods 13 and 14. Jaw 11 includes a semi-circular cage 15 containing rollers 16. Jaw 12 includes a semi-circular cage 17 containing rollers 18. A partial perspective view of a portion of semi-circular cage 15 is shown in figure 6. It will be seen that openings 19 are provided in cage 15 which allow rollers 16 to protrude therethrough but are sized so as not to allow rollers 1 6 to escape from cage 15.

The inner faces of jaws 11 and 12 adjacent cage assemblies 15 and 17 have recesses formed therein, similar to the recesses 3 shown in figure 1. Springs 20 (only one pair of which are indicated on each side) centrally bias rollers 16 and 18 within the recesses. Other suitable biasing means such as resilient materials may also be employed in place of springs 20.

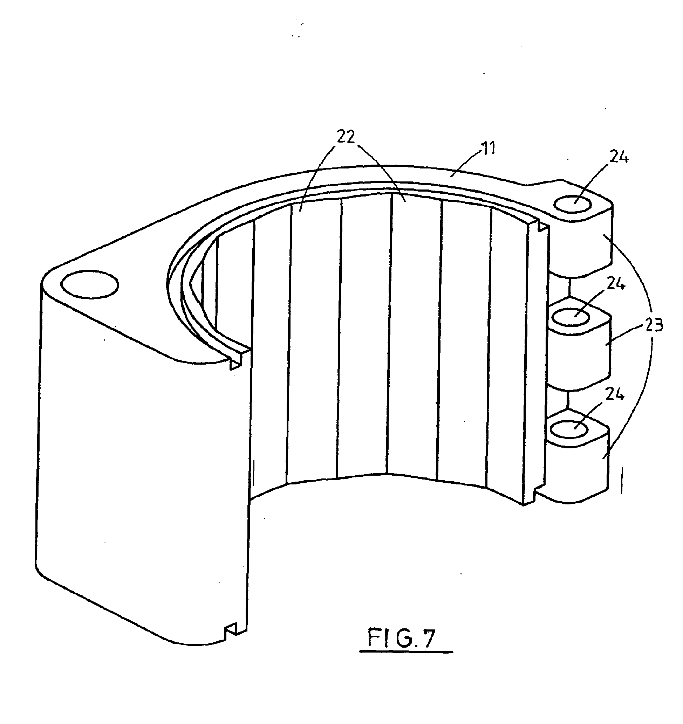

Jaws 11 and 12 may pivot away from each other about rods 13 and 14 so that the jaws may open. This enables a tubular member 21 to be laterally introduced between the jaws and the jaws closed to retain the tubular member 21 therewithin. Jaw 11 (as shown in figure 7) includes recesses 22 formed on the inside face thereof and is provided with a plurality of fingers 23 at the distal end thereof. Fingers 23 have bores 24 therethrough.

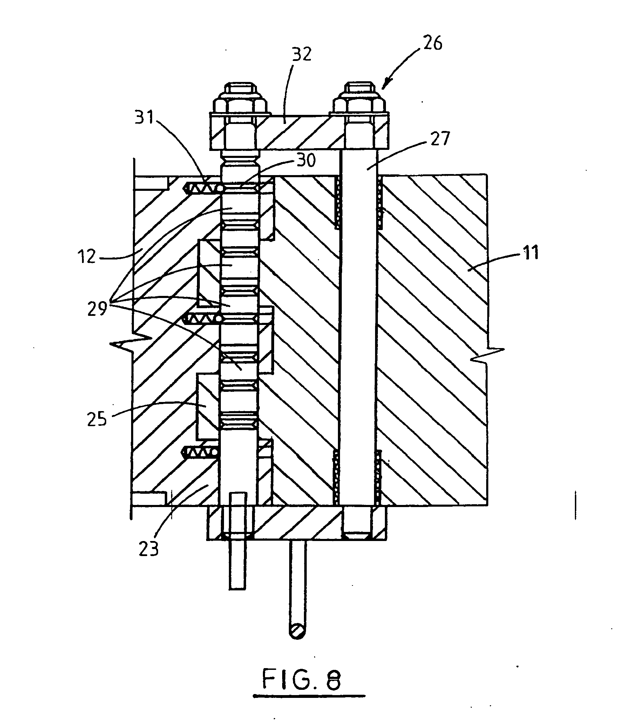

As best shown in figure 8 arm 12 is seen to be provided with complimentary fingers 23 (only one of which is indicated) which interengage with fingers 25 (only one of which is indicated) when the jaws are in the closed position. Jaw 11 supports a locking assembly 26. The locking assembly includes a guide rod 27 located within a bore in arm 11 which allow the locking assembly to slide up and down between opened and closed positions.

Each of the fingers 23 and 25 are seen to include a locking pin section 29 having a respective groove 30 formed therein (one of which is indicated). When the locking assembly 26 is in the raised position, shown in figure 8, the locking pin sections 29 extend from one finger 23 to an adjacent finger 25. This locks the distal ends of arms 11 and 12 together. Spring loaded pins 31 (only one of which is indicated) are biased within grooves 30 in this position to retain the locking pin sections 29 in place.

When the locking assembly is forced down so that plate 32 abuts arms 11 and 12 the locking pin sections 29 are positioned so as to be located entirely within the bore of a single finger 23 or 25. This allows the distal ends of arms 11 and 12 to be separated and the clamping mechanism to be opened.

In use, jaws 11 and 12 are pivoted apart so as to provide an opening which will allow a tubular member to be introduced laterally within the clamping mechanism. Jaws 11 and 12 are then pivoted towards one another and locking mechanism 26 is lifted so as to lock the distal ends of arms 11 and 12 together (as shown in figure 5).

When cages 15 and 17 are in their initial positions rollers 16 and 18 are positioned adjacent the apexes of the recesses formed in the jaws. This allows a tubular 21 to be rotated in either direction. When it is desired to grip tubular 21, cages 15 and 17 are rotated relative to jaws 11 and 12 in the direction in which rotation is to be restrained. This brings rollers 16 and 18 into engagement with their respective ramp surfaces so as to wedge rollers 16 and 18 between tubular 21 and jaws 11 and 12. To release tubular 21 it may be rotated in the opposite direction and locking mechanism 26 lowered to open the jaws.

Figure 6 shows a portion of a cage 15. As shown in figure 6 the rollers 16 preferably comprise a number of separate stacked rollers. This allows the rollers to maintain better contact over the section of tubular to be clamped, as some sections may have dents or other deformations.

The axial length of each jaw 11, 12 will typically be in a range of from 10 to one times the nominal pipe diameter. The roller element 16 will typically have a diameter of from 0.01 to 0.5 times the nominal pipe diameter. The axial length of the roller elements 16 will preferably be between 0.1 to twice the nominal pipe diameter.

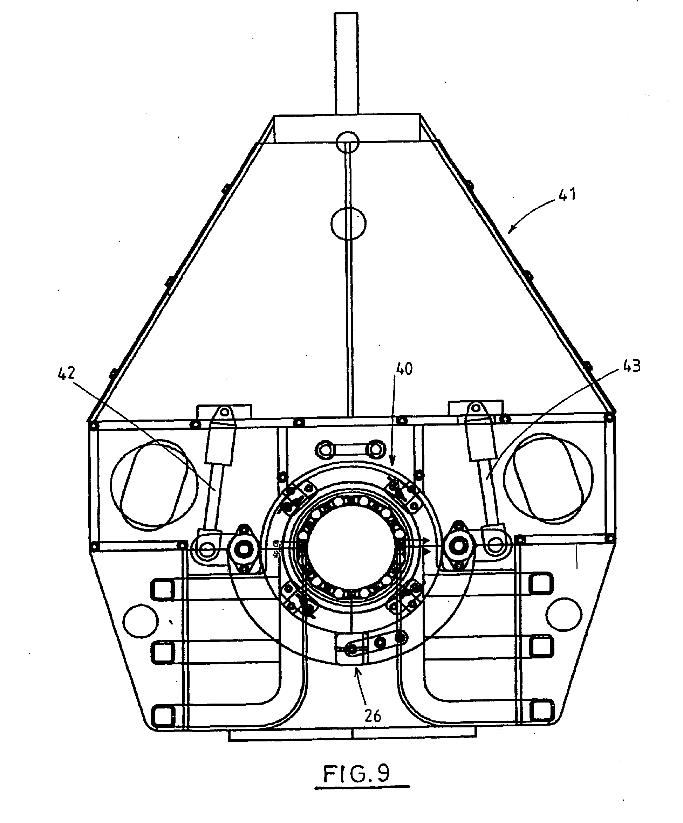

Figure 9 shows an automated tubular handling mechanism incorporating the clamping mechanism shown in figures 2 to 6. Clamping mechanism 40 is contained within a tubular handling apparatus 41. Rams 42 and 43 may be driven to rotate arms 11 and 12 into their opened and closed positions and a further ram, (not shown), may be used to move the locking mechanism 26 between its opened and closed positions.

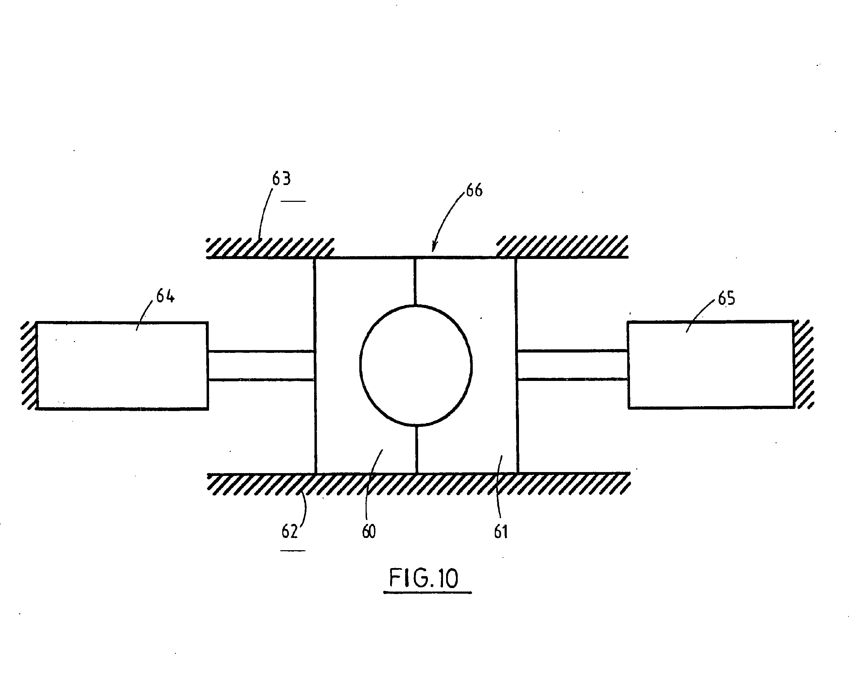

Referring now to figure 10 an opposed arrangement is shown in which jaw sections 60 and 61 are guided within guides 62 and 63. Jaws 60 and 61 are driven apart and together by rams 64 and 65. A pipe may be laterally introduced through the opening at 66 when the jaws are moved apart.

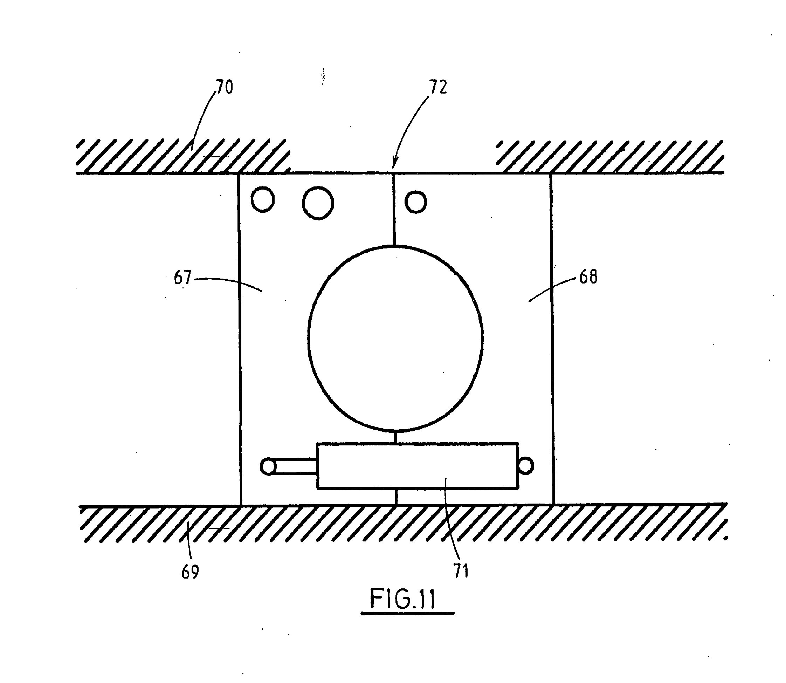

Referring now to figure 11 another configuration is shown, similar to that shown in figure 10. Jaws 67 and 68 are guided within guides 69 and 70 and are driven together and apart by ram 71. As only a single ram 71 is utilised in this example a locking mechanism of the type shown in figure 8 is required at 72.

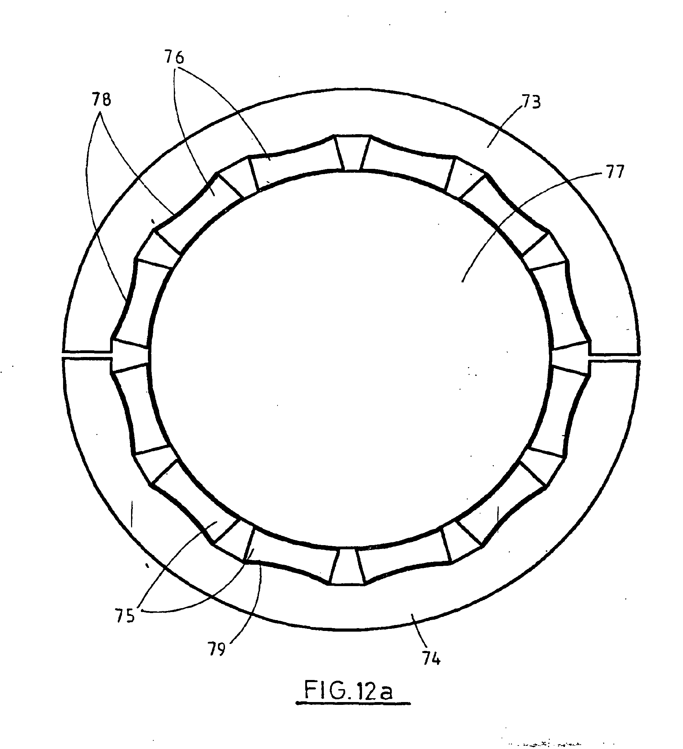

Figure 12a shows a gripping mechanism suitable for use as slips in a drilling rig. A slip is designed to grip an oil field tubular and restrain it from longitudinal movement due to the weight of the string. In this case rollers 75 and 76 are provided about the inside of jaws 73 and 74 in an orientation transverse to the axis of oil field tubular 77. Rollers 75 and 76 have flanged ends so that the roller profile closely matches that of the tubular 77 it is designed to grip. Corresponding ribs 78 and 79 locate and guide rollers 75 and 76 axially along jaws 73 and 74. Guides 78 and 79 taper inwardly from the tops to the bottoms of the jaws so that, in use, as rollers 75 and 76 are drawn down they become wedged between tubular 77 and jaws 73 and 74.

In use jaws 73 and 74 may be translated apart to allow a tubular 77 to be laterally introduced. Jaws 73 and 74 may then be closed and secured together. Rollers 75 and 76 may be retained within respective cages. The cages may be maintained at an elevated position whilst jaws 73 and 74 are closing and be urged downwardly, perhaps by gravity, once jaws 73 and 74 are closed. As guides 78 and 79 taper inwardly towards the bottoms of the jaws rollers 75 and 76 will thus be wedged between tubular 77 and jaws 73 and 74 as tubular 77 is pulled down. This arrangement could be substituted for a conventional slip assembly.

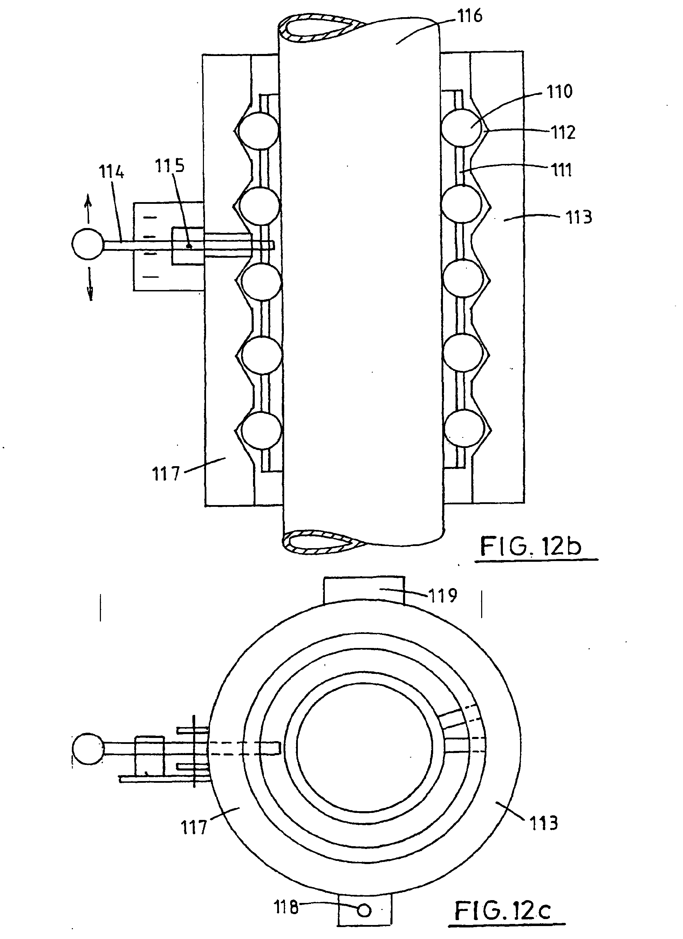

Referring now to figures 12b and 12c a slip having an actuating mechanism is shown. In this embodiment a plurality of button type rollers 110 are retained within a cage 111. The rollers are located within annular recesses 112 within the jaw bodies 113. An actuating lever 114 is pivotable about pin 115 and vertical movement of lever 114 thus causes vertical movement of cage 111. Upward movement of lever 114 causes cage 111 to move downwardly and prevents downward movement of a drill string 116 within the slip. Downward movement of lever 114 prevents upward movement of drill string 116 with respect to the slip. When lever 114 is in the middle position (as shown) the drill string can move in either direction. This enables a user to selectively control movement of a drill string relative to the slip.

Referring now to figure 12c it will be seen that the slip comprises two jaws 113 and 117 pivotable about hinge 118 and closed by a closing device 119.

In another embodiment the outer profile of jaw bodies 113 may taper from the top to the bottom and the jaws may be received in a body having a bore of a profile corresponding to the outer profile of the jaws. In this way the jaws close about a tubular as the jaws are located within the bore in the body.

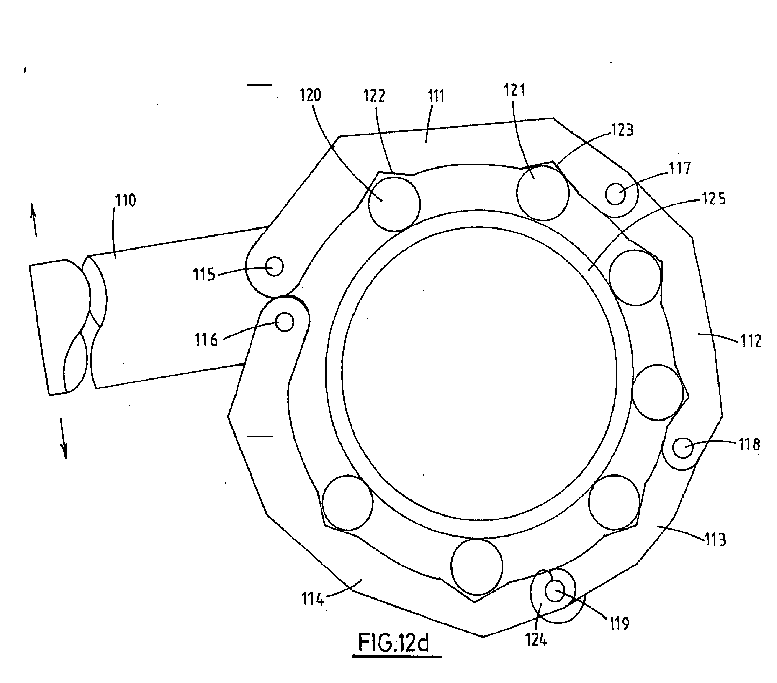

Referring now to figure 12d a pipe clamp is shown. The pipe clamp includes a handle 110 having jaw sections 111 to 114. Jaw sections 111 and 114 are pivotable connected to handle 110 at points 115 and 116. Jaw sections 111 and 112 are pivotably connected at 117, jaw sections 112 and 113 are pivotably connected at 118 and jaw sections 113 and 114 are pivotally connected at 119.

Jaw 111 has associated rollers 120 and 121 which locate within recesses 122 and 123 of jaw 111. Rollers are likewise provided in recesses in the other jaw sections.

Jaw sections 113 and 114 are connected together by a latch 124. This enables the part clamp to be fitted about a pipe and then secured together by latch 124 securing together jaws 113 and 114. Additional jaw sections may also be inserted between jaw sections 113 and 114 to allow larger pipes to be gripped.

In use, the jaw sections are fitted about a pipe and latch 124 secures jaw sections 113 and 114 together. Handle 110 may then be rotated about the pipe. This causes pivot points 115 and 116 to move with respect to one another so as to tighten the jaw sections about the pipe 125. This forces rollers 120 and 121 etc tightly into recesses 122 and 123 so as to firmly retain pipe 125 with respect to the pipe clamp. The use of rollers 120 and 121 minimises any damage to the pipe.

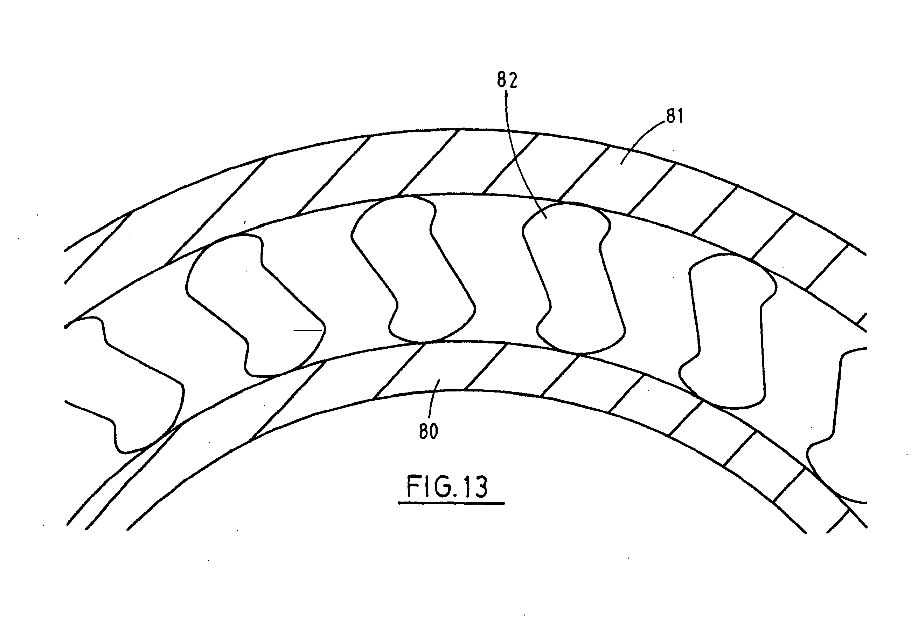

Referring now to figure 13 an alternative embodiment is shown in which asymmetric gripping elements are employed. Instead of the rollers previously described, having circular cross-sections, rollers having noncircular gripping elements may be employed. In the embodiment of figure 13 a dog bone 82 is shown between the surfaces of a pipe 80 and a jaw 81. The outer surface of pipe 80 and inner surface of jaw 81 are substantially circular in cross-section. The asymmetric shape of dog bone 82 means that relative rotation between part 80 and jaw 81 causes dog bone 82 to rotate. As it rotates sections of dog bone 82 having increasing diameter are positioned between part 80 and jaw 81 until dog bone 82 wedges part 80 and jaw 81 together. It will be appreciated that gripping means incorporating dog bones may be substituted in the examples previously described.

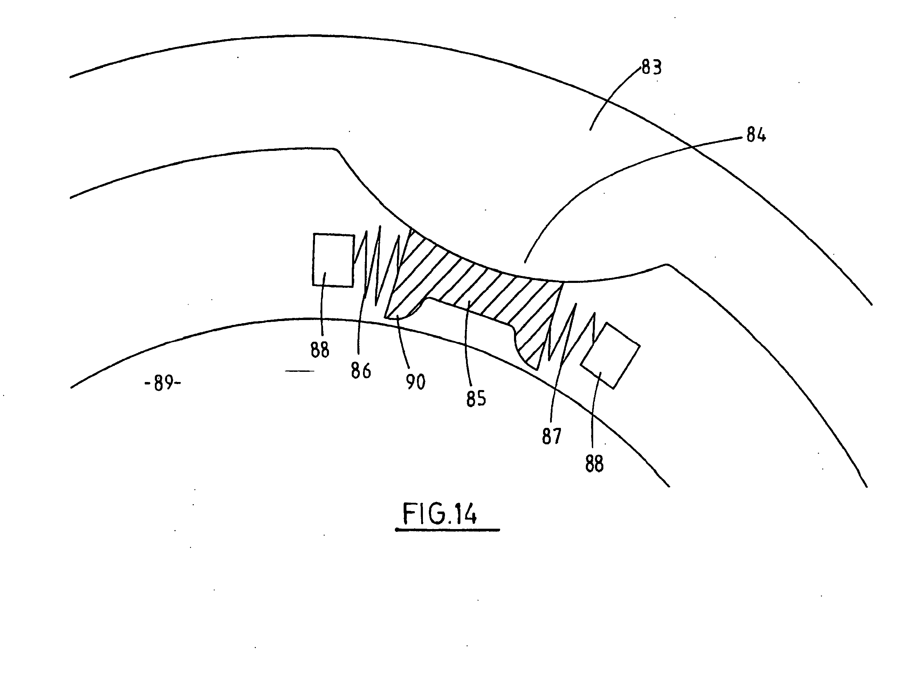

Referring now to figure 14 a further alternative gripping means is described. In this embodiment a jaw or outer race 83 has a plurality of axial ribs distributed about the interior thereof. Cams 85 engage ribs 84 and their orientation is adjusted by forces applied via springs 86 and 87 from cage 88. In use cage 88 is initially positioned so that cam 85 assumes the position shown in figure 14. When cage 88 is moved to the left with respect to race 83 spring 86 tilts cam 85 so that its right hand end 90 engages pipe 89. Movement of pipe 89 to the left with respect to jaw 83 causes cam 85 to become wedged and locks pipe 89 and jaw 83 together. Again such gripping element could be substituted for those previously described.

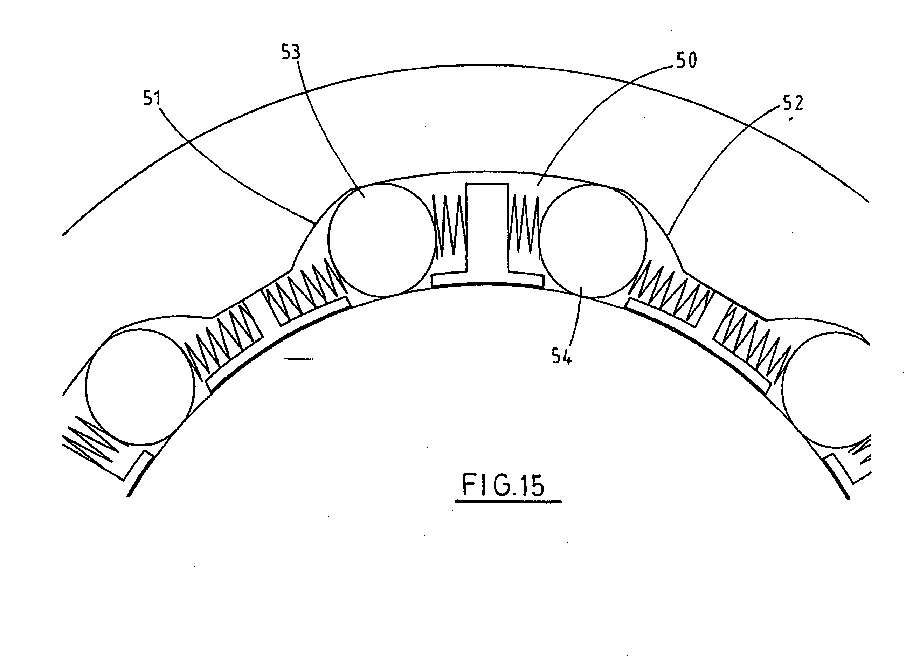

Referring now to figure 15 an alternative recess profile is shown. In this embodiment recess 50 has a ramp portion 51 at one end and a corresponding ramp portion 52 at the other end. In this case two rollers 53 and 54 are located within the single recess 50. It will be appreciated that in this embodiment roller 53 will engage the tubular when it is rotated in one direction and roller 54 will engage the tubular when it is rotated in the opposite direction. Again this arrangement may be substituted for the arrangements described.

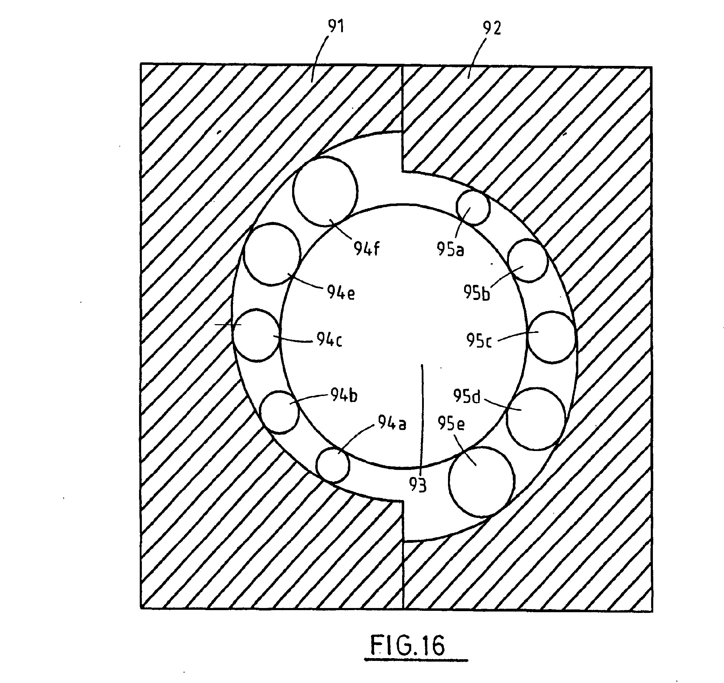

Figure 16 shows an alternative construction in which jaws 91 and 92 are offset with respect to one another and graduated rollers 94a to 94f and 95a to 95f are provided between jaws 91 and 92 and pipe 93. This arrangement has the advantage that axial recesses do not need to be formed in the inner faces of the jaws as the offset construction provides a natural wedge between the inner face of jaws 91 and 92 and pipe 93.

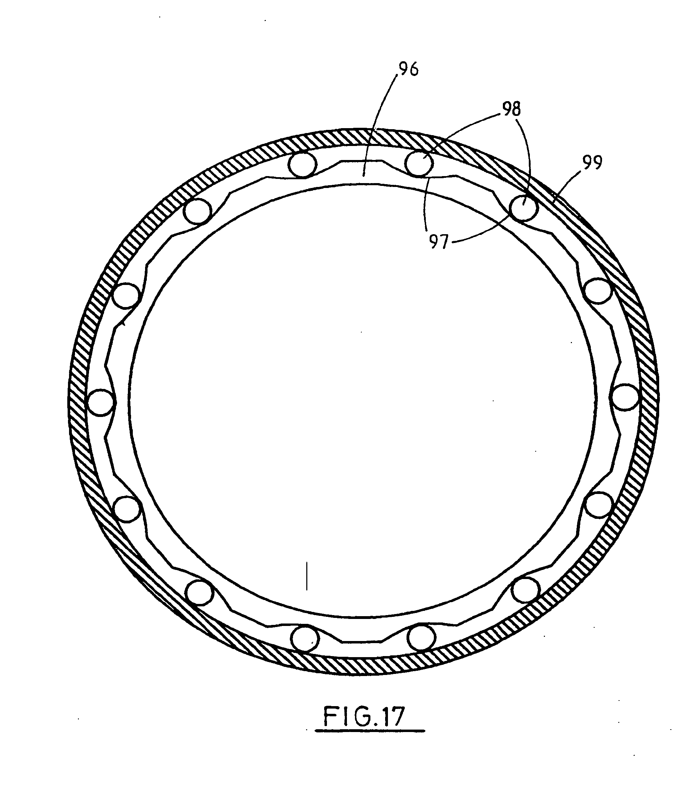

Figure 17 illustrates that a jaw assembly or gripping device disclosed herein may equally be applied to gripping the interior or exterior of an object. Figure 17 illustrates how a gripping device may be utilised to grip case tubular body 96 has axial recesses 97 formed in the exterior thereof and rollers 98 located within the recesses. The rollers may be accommodated within a cage which enables actuation of the gripping means as previously described.

Although the clamping mechanism has been described in relation to the clamping of oil field tubulars it is to be appreciated that it may have application in other areas also. The clamping mechanism may be incorporated into a hand tool to grip sections of pipe. A ratchet system may be incorporated to allow incremental rotation.

It will thus be seen that a clamping mechanism is disclosed herein that is suitable for restraining a tubular against high rotation torques in either direction without damaging the tubular. The clamping mechanism may be incorporated within existing tongs of oil field tubular handling apparatus. The clamping mechanism may be operated quickly and easily and requires no lubrication.

The clutch disclosed herein is selectively actuateable and may operate in either direction. The clutch may be incorporated as an emergency brake on a vehicle drive shaft, conveyor system etc or where a temporary brake is required and the shaft end is not accessible.

Where in the foregoing description reference has been made to integers or components having known equivalents then such equivalents are herein incorporated as if individually set forth.

Although this invention has been described by way of example it is to be appreciated that improvements and/or modifications may be made thereto without departing from the scope of the invention as defined in the appended claims.

## Claims

1. A slip including:
a plurality of jaws (113, 117) which may be moved apart to allow an oil field tubular (116) to be positioned within the jaws and moved together to substantially encompass the tubular, the jaws comprising a plurality of ramped annular recesses (112) formed therein and having opposed ramped surfaces;
a plurality of button type rollers (110) retained by a cage (111) about the mouths of the jaws within the ramped recesses between the jaws and the tubular, and transversely aligned for longitudinal gripping; and
an actuating lever (114) pivotally connected to a pin (115) and operable to move the cage (111) axially to selectively control movement of the tubular (116) relative to the slip,
wherein the actuating lever is positionable in any of an upward position in which movement of the tubular in a downward direction is prevented, a downward position in which movement of the tubular in an upward direction is prevented, and a middle position in which the tubular is allowed to move freely in both the upward and downward directions,
and wherein, when the jaws are closed about a tubular, axial movement of the tubular enclosed within the jaws may cause the rollers to move into positions in which they are wedged between the ramped recesses and the tubular so that the tubular is gripped by the slip, in dependence on the position of the actuating lever.

## Patentansprüche

1. Abfangkeil, der Folgendes einschließt:
mehrere Klemmbacken (113, 117), die auseinanderbewegt werden können, um zu ermöglichen, dass ein Ölfeld-Rohrabschnitt (116) innerhalb der Klemmbacken angeordnet wird, und zusammenbewegt, um den Rohrabschnitt im Wesentlichen zu umschließen, wobei die Klemmbacken mehrere abgeschrägte ringförmige Aussparungen (112) umfassen, die in denselben geformt sind und gegenüberliegende abgeschrägte Oberflächen haben,
mehrere knopfartige Rollen (110), die durch einen Käfig (111) um die Öffnungen der Klemmbacken innerhalb der abgeschrägten Aussparungen zwischen den Klemmbacken und dem Rohrabschnitt gehalten und in Querrichtung für ein Greifen in Längsrichtung ausgerichtet werden, und
einen Betätigungshebel (114), der schwenkbar mit einem Stift (115) verbunden und funktionsfähig ist, um den Käfig (111) in Axialrichtung zu bewegen, um selektiv die Bewegung des Rohrabschnitts (116) im Verhältnis zu dem Abfangkeil zu steuern,
wobei der Betätigungshebel in einer beliebigen von einer oberen Stellung, in der eine Bewegung des Rohrabschnitts in einer Abwärtsrichtung verhindert wird, einer unteren Stellung, in der eine Bewegung des Rohrabschnitts in einer Aufwärtsrichtung verhindert wird, und einer mittleren Stellung, in der es ermöglicht wird, dass sich der Rohrabschnitt frei sowohl in der Auswärts- als auch in der Abwärtsrichtung bewegt, angeordnet werden kann,
und wobei, wenn die Klemmbacken um einen Rohrabschnitt geschlossen sind, in Abhängigkeit von der Stellung des Betätigungshebels eine axiale Bewegung des innerhalb der Klemmbacken umschlossenen Rohrabschnitts bewirken kann, dass sich die Rollen zu Stellungen bewegen, in denen sie zwischen den abgeschrägten Aussparungen und dem Rohrabschnitt verkeilt sind, so dass der Rohrabschnitt durch den Abfangkeil ergriffen wird.

## Revendications

1. Coin de retenue, englobant :
plusieurs mâchoires (113, 117), pouvant être écartées pour permettre le positionnement d'un élément tubulaire d'un champ de pétrole (116) dans les mâchoires, et pouvant être rapprochées pour renfermer pour l'essentiel l'élément tubulaire, les mâchoires comprenant plusieurs évidements (112) annulaires en rampe qui y sont formés, et comportant des surfaces en rampe opposées ;
plusieurs rouleaux du type bouton (110) retenus par une cage (111) autour des embouchures des mâchoires dans les évidements en rampe, entre les mâchoires et l'élément tubulaire, et alignés transversalement en vue d'une préhension longitudinale ; et
un levier d'actionnement (114), connecté de manière pivotante à une broche (115) et servant à déplacer la cage (111) axialement en vue de contrôler de manière sélective le déplacement de l'élément tubulaire (116) par rapport au coin de retenue ;
dans lequel le levier d'actionnement peut être positionné dans une position quelconque, une position orientée vers le haut, dans laquelle le déplacement de l'élément tubulaire dans une direction allant vers le bas est empêché, une position orientée vers le bas, dans laquelle le déplacement de l'élément tubulaire dans une direction allant vers le haut est empêché, et une position centrale, dans laquelle l'élément tubulaire peut se déplacer librement dans les directions allant vers le haut et vers le bas ;
et dans lequel, lorsque les mâchoires sont fermées autour d'un élément tubulaire, un déplacement axial de l'élément tubulaire renfermé dans les mâchoires peut entraîner le déplacement des rouleaux dans des positions dans lesquelles ils sont calés entre les évidements en rampe et l'élément tubulaire, de sorte que l'élément tubulaire est saisi par le coin de retenue, en fonction de la position du levier d'actionnement.
